# EUROPÄISCHE PATENTANMELDUNG

(11) **EP 4 446 167 A2**
(43) Veröffentlichungstag der Anmeldung: **16.10.2024**
(21) Anmeldenummer: 24197801.4
(22) Anmeldetag: 20.07.2022
(51) Int. Cl.: B60P 3/32

(54) **VERFAHREN ZUM NIVELLIEREN EINES FAHRZEUGS, INSBESONDERE EINES WOHNWAGENS ODER EINES WOHNMOBILS**

(30) Priorität: 22.07.2021 DE 102021118947
(62) Teilanmeldung aus: 22186043.0
(71) Anmelder: Reich GmbH Regel- und Sicherheitstechnik, 35713 Eschenburg-Wissenbach (DE)
(72) Erfinder: Oliver, Schaurer, 85445 Oberding (DE)
(74) Vertreter: Hofstetter, Schurack & Partner

(57) **Zusammenfassung**

Die Erfindung betrifft ein Verfahren zum Nivellieren eines Fahrzeugs (10), bei welchem mittels wenigstens einer bezüglich des Fahrzeugs (10) externen und als ein unabhängig von dem Fahrzeug (10) vollständig zusammengebautes Modul ausgebildeten Nivelliervorrichtung (78) Daten (80) empfangen werden, welche eine Ausrichtung des Fahrzeugs (10) relativ zu einer horizontalen Ebene (E) und/oder eine Abweichung der Ausrichtung von der horizontalen Ebene (E) und/oder wenigstens eine Maßnahme charakterisieren, durch welche die Abweichung zumindest zu verringern oder aufhebbar ist. Mittels der Nivelliervorrichtung (78) wird die Abweichung automatisch zumindest verringert oder aufgehoben, indem in Abhängigkeit von den empfangenen Daten (80) wenigstens ein Aktor der Nivelliervorrichtung (78) betrieben wird, wodurch wenigstens ein Betätigungselement relativ zu wenigstens einem Basiselement der Nivelliervorrichtung (78) und dadurch zumindest ein Teilbereich des Fahrzeugs (10) zumindest in vertikaler Richtung und/oder in Fahrzeughochrichtung (24) bewegt werden.

## Beschreibung

Die vorliegende Erfindung betrifft ein Verfahren zum Nivellieren eines Fahrzeugs, insbesondere eines Wohnwagens oder eines Wohnmobils.

Die Beliebtheit von Fahrzeugen, die für Urlaubs- und Wohnzwecke verwendet werden und somit beispielsweise als Wohnwagen oder Wohnmobile ausgebildet sind, nimmt zur Zeit sehr stark zu. Personen nutzen diese Fahrzeuge, um ihre Freizeit und ihren Urlaub und somit eine recht lange Zeit darin zu verbringen. Hierzu wird das jeweilige Fahrzeug beispielsweise auf einem Parkplatz oder einem Campingplatz abgestellt, wobei das Fahrzeug auf dem Parkplatz oder Campingplatz eine recht lange Zeit abgestellt bleibt, um darin wohnen zu können. Dabei ist es wünschenswert, das Fahrzeug so gut wie möglich zu nivellieren, das heißt horizontal auszurichten. Unter "Nivellieren", was auch als Nivellierung bezeichnet wird, ist ein horizontales Ausrichten des Fahrzeugs, insbesondere eines Bodens des Fahrzeugs, zu verstehen, dessen Boden den Innenraum des Fahrzeugs in Fahrzeughochrichtung nach unten hin begrenzt. Dabei ist unter dem Nivellieren insbesondere zu verstehen, dass das Fahrzeug beziehungsweise dessen Boden derart ausgerichtet, das heißt positioniert wird, dass das Fahrzeug beziehungsweise dessen Boden nicht oder möglichst wenig von der Horizontalen, das heißt von einer horizontalen Ebene, abweicht. Dadurch kann beispielsweise sichergestellt oder gewährleistet werden, dass beispielsweise im Innenraum des Fahrzeugs angeordnete Oberflächen, auf denen Objekte abgestellt und/oder Arbeiten wie beispielsweise Küchenarbeiten verrichtet werden sollen, nicht oder möglich wenig von der Horizontalen, das heißt von der horizontalen Ebene abweichen. Dadurch kann vermieden werden, dass auf den Oberflächen abgestellte Objekte von den Oberflächen herunterrutschen oder Flüssigkeiten von den Oberflächen herunterfließen. Beispielsweise verläuft die jeweilige Oberfläche dabei parallel zum Boden. Die jeweilige Oberfläche ist beispielsweise eine Oberfläche eines in einem Innenraum angeordneten Tisches oder eines in einem Innenraum angeordneten Schranks. Es hat sich gezeigt, dass das Nivellieren eines Fahrzeugs üblicherweise sehr anstrengend und zeitaufwändig ist.

Aufgabe der vorliegenden Erfindung ist es daher, ein Verfahren zu schaffen, mittels welchem ein Fahrzeug auf besonders einfache und zeitgünstige Weise nivelliert werden kann.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den übrigen Ansprüchen angegeben.

Offenbart ist ein erster, nicht zur Erfindung gehörender Aspekt, welcher ein Verfahren zum Nivellieren eines Fahrzeugs, insbesondere eines auch als Caravan bezeichneten Wohnwagens oder eines Wohnmobils, betrifft. Das Nivellieren wird auch als Nivellierung bezeichnet. Unter dem Nivellieren ist im Rahmen der vorliegenden Offenbarung ein horizontales Ausrichten des Fahrzeugs, insbesondere zumindest einer Oberfläche des Fahrzeugs, zu verstehen. Unter dem horizontalen Ausrichten des Fahrzeugs, insbesondere der Oberfläche, ist zu verstehen, dass das Fahrzeug, insbesondere die Oberfläche, derart ausgerichtet oder positioniert wird, dass das Fahrzeug, insbesondere die Oberfläche nicht oder möglichst wenig von der Horizontalen, das heißt von einer horizontalen Ebene abweicht. Mit anderen Worten ist unter dem Nivellieren insbesondere zu verstehen, dass ein insbesondere etwaiger Unterschied zwischen dem Fahrzeug, insbesondere der Oberfläche, und der Horizontalen beziehungsweise der horizontalen Ebene zumindest reduziert oder aufgehoben wird. Bei der Oberfläche handelt es sich beispielsweise um eine in einem Innenraum des Fahrzeugs angeordnete Oberfläche, wobei der Innenraum des Fahrzeugs durch einen Aufbau des Fahrzeugs begrenzt sein kann. Insbesondere kann die Oberfläche eine im Innenraum angeordnete Oberfläche eines Bodens des Fahrzeugs, insbesondere des Aufbaus, sein, wobei der Innenraum des Fahrzeugs in Fahrzeughochrichtung nach unten hin durch den Boden begrenzt ist. Ferner kann es sich bei der Oberfläche um eine in dem Innenraum angeordnete Oberfläche eines in dem Innenraum angeordneten Möbelstücks oder Einrichtungsgegenstands handeln, wobei das Möbelstück oder der Einrichtungsgegenstand beispielsweise ein Tisch oder ein Schrank ist. Beispielsweise kann es sich bei der Oberfläche um eine Arbeitsfläche oder um eine Oberfläche einer Arbeitsplatte handeln, wobei auf der Arbeitsfläche beziehungsweise auf der Arbeitsplatte Objekte abgestellt werden können. Durch das Nivellieren des Fahrzeugs kann beispielsweise vermieden werden, dass auf der Oberfläche abgestellte Objekte schwerkraftbedingt von der Oberfläche herabrutschen oder herabrollen oder unerwünschter Weise auf der Oberfläche herumrutschen oder herumrollen. Ferner kann durch das Nivellieren beispielsweise vermieden werden, dass auf der Oberfläche befindliche Flüssigkeiten schwerkraftbedingt von der Oberfläche herabfließen oder herabtropfen oder unerwünschter Weise umherfließen und sich somit unerwünschterweise schwerkraftbedingt auf der Oberfläche übermäßig verteilen.

Bei dem Verfahren gemäß dem ersten Aspekt wird ein erstes mobiles Endgerät verwendet, welches ein Mobilfunkmodul aufweist, mittels welchem das erste mobile Endgerät leitungslos, das heißt ohne eine körperliche beziehungsweise physisch vorhandene Leitung mit einem Mobilfunknetz verbunden oder verbindbar ist. Bei dem ersten mobilen Endgerät kann es sich beispielsweise um einen insbesondere mobilen, das heißt tragbaren PC (Personal Computer - persönlicher Computer oder persönlicher Rechner) handeln, wobei der PC insbesondere ein auch als Tabletcomputer, Tablet-PC oder Flachrechner bezeichnetes Tablet sein kann. Unter einem solchen Tablet ist ein tragbarer, flacher Computer, insbesondere in Form eines Schreibblocks zu verstehen. Ganz vorzugsweise weist das erste mobile Endgerät wenigstens oder genau eine auch als Bildschirm bezeichnete, elektrische oder elektronische Anzeige auf, die besonders bevorzugt als ein auch als Berührbildschirm oder Touchscreen bezeichneter, berührungsempfindlicher Bildschirm ausgebildet ist. Im Rahmen der vorliegenden Offenbarung ist unter einem beziehungsweise dem zuvor genannten Mobilfunknetz eine technische Infrastruktur zu verstehen, über die oder auf der eine Übertragung von Signalen für Mobilfunk stattfindet. Insbesondere umfasst das Mobilfunknetz auch als Sendemasten bezeichnete Mobilfunkmasten, durch welche einfach auch als Funkzellen bezeichnete Zellen gebildet sind, die sich vorzugsweise gegenseitig überlappen. Das erste mobile Endgerät kann sich dabei mittels des Mobilfunkmoduls leitungslos mit der jeweiligen Funkzelle und somit über die jeweilige Funkzelle mit dem Mobilfunknetz verbinden, um beispielsweise über das Mobilfunknetz Daten beispielsweise mit wenigstens einer anderen, mit dem Mobilfunknetz verbundenen Recheneinheit auszutauschen. Wird das erste mobile Endgerät relativ zu der Erdoberfläche bewegt, beispielsweise derart, dass das mobile Endgerät aus einer ersten der Funkzellen herausbewegt und in eine zweite der Funkzellen hineinbewegt wird, so werden das Mobilfunkmodul und somit das erste mobile Endgerät von der ersten Zelle getrennt und mit der zweiten Zelle leitungslos verbunden. Dadurch kann das erste mobile Endgerät beispielsweise in einem Land, in welchem das Mobilfunknetz gebildet ist, große Strecken von beispielsweise hundert oder tausend Kilometern relativ zu der Erdoberfläche umherbewegt werden, wobei das vorzugsweise als Mobilfunkgerät ausgebildete, zweite mobile Endgerät mit dem Mobilfunknetz leitungslos verbunden bleibt, insbesondere dadurch, dass sich das Mobilfunkmodul abwechselnd von einer der Zellen trennt und mit einer anderen der Zellen leitungslos verbindet. Beispielsweise handelt es sich bei dem Mobilfunknetz um GSM (Global System for Mobile Communications), GPRS (General Packet Radio Service), UMTS (Universal Mobile Telecommunications System), LTE (Long Term Evolution) oder 5G. Ganz insbesondere ist es denkbar, dass das erste mobile Endgerät wenigstens einen auch als Schallwandler bezeichneten Lautsprecher zum Wiedergeben von insbesondere mit dem menschlichen Gehör akustisch wahrnehmbaren Tönen aufweist. Bei dem Verfahren gemäß dem ersten Aspekt kann das erste mobile Endgerät mittels des Mobilfunkmoduls leitungslos mit dem Mobilfunknetz verbunden sein oder das erste mobile Endgerät ist während des Verfahrens gemäß dem ersten Aspekt von dem Mobilfunknetz getrennt, jedoch weist in beiden Fällen das erste mobile Endgerät das Mobilfunkmodul auf, welches leitungslos mit dem Mobilfunknetz verbunden oder verbindbar ist.

Bei dem Verfahren gemäß dem ersten Aspekt werden mittels des ersten mobilen Endgeräts Daten an ein zweites mobiles Endgerät, insbesondere leitungslos, gesendet. Das zweite mobile Endgerät muss zunächst nicht notwendigerweise Bestandteil des Verfahrens gemäß dem ersten Aspekt sein, wobei das zweite mobile Endgerät Bestandteil des Verfahrens gemäß dem ersten Aspekt sein kann. Unter dem Merkmal, dass mittels des ersten mobilen Endgeräts Daten an das zweite mobile Endgerät gesendet werden, ist somit zunächst insbesondere zu verstehen, dass das erste mobile Endgerät die Daten, insbesondere leitungslos, bereitstellt, derart, dass das zweite mobile Endgerät die Daten, insbesondere leitungslos, empfängt oder empfangen kann. Ganz vorzugsweise weist das erste mobile Endgerät wenigstens einen Prozessor auf, welcher auch als zentrale Recheneinheit oder Zentraleinheit (CPU - Central Processing Unit) bezeichnet wird oder ausgebildet sein kann. Insbesondere ist oder umfasst der Prozessor eine elektronische Schaltung, mittels welcher eine Datenverarbeitung durchgeführt werden kann. Insbesondere sind der Prozessor und somit das erste mobile Endgerät dazu ausgebildet, ein auch als Computerprogramm oder Softwareprogramm bezeichnetes Programm auszuführen. Das Programm ist beispielsweise eine Applikation, welche auch als App bezeichnet wird. Dabei ist es insbesondere vorgesehen, dass das Verfahren gemäß dem ersten Aspekt mittels des Programms durchgeführt wird, insbesondere dadurch, dass das Programm, welches beispielsweise in einem insbesondere elektrischen oder elektronischen Speicher des ersten mobilen Endgeräts gespeichert ist, das erste mobile Endgerät betreibt, insbesondere steuert oder regelt und dadurch veranlasst, das Verfahren gemäß dem ersten Aspekt durchzuführen oder auszuführen.

Bei dem Verfahren gemäß dem ersten Aspekt charakterisieren, das heißt definieren die Daten eine insbesondere aktuelle Ausrichtung des Fahrzeugs relativ zu der horizontalen Ebene. Alternativ oder zusätzlich charakterisieren die Daten eine Abweichung der Ausrichtung des Fahrzeugs von der horizontalen Ebene und/oder die Daten charakterisieren wenigstens eine Maßnahme, durch welche die Abweichung der Ausrichtung des Fahrzeugs von der horizontalen Ebene zumindest zu verringern oder aufhebbar ist. Dadurch, dass das erste mobile Endgerät die Daten, vorzugsweise leitungslos, bereitstellt und hierdurch an das zweite mobile Endgerät überträgt, ermöglicht es das Verfahren gemäß dem ersten Aspekt, das erste mobile Endgerät, insbesondere direkt, auf der zuvor genannten, zu nivellierenden Oberfläche anzuordnen, insbesondere derart, dass das erste mobile Endgerät, insbesondere direkt, auf die Oberfläche gelegt und somit direkt an der Oberfläche abgestützt wird. Des Weiteren kann das erste mobile Endgerät an der Oberfläche angeordnet, insbesondere auf die Oberfläche aufgelegt, bleiben und dabei die Daten an das zweite mobile Endgerät übermitteln, während beispielsweise eine auch als Nutzer bezeichnete Person das vorzugsweise die Daten empfangende, zweite mobile Endgerät nutzt und hierbei insbesondere handhabt und/oder mit sich führt, insbesondere derart, dass sich die Person mit dem zweiten mobilen Endgerät relativ zu dem ersten mobilen Endgerät und insbesondere relativ zu dem Fahrzeug bewegt, insbesondere während das erste mobile Endgerät auf der Oberfläche angeordnet und insbesondere relativ zu der Oberfläche unbeweglich ist, mithin sich nicht relativ zu der Oberfläche bewegt. Somit kann sich die Person bedarfsgerecht und somit nahezu frei relativ zu dem ersten mobilen Endgerät und insbesondere relativ zu dem Fahrzeug bewegen und dadurch beispielsweise wenigstens eine Maßnahme ergreifen oder durchführen, um die etwaige Abweichung der Ausrichtung des Fahrzeugs, insbesondere der Oberfläche, relativ zu der horizontalen Ebene zumindest zu verringern oder aufzuheben. Die Person muss sich dabei immer wieder zu dem ersten mobilen Endgerät bewegen, um beispielsweise über das erste mobile Endgerät die Daten zu prüfen oder zu analysieren, sondern die Person kann das zweite mobile Endgerät mit sich führen oder handhaben oder tragen und mittels des zweiten mobilen Endgeräts die Daten nutzen, insbesondere analysieren oder prüfen, um die Abweichung zumindest zu verringern oder aufzuheben. Das Verfahren gemäß dem ersten Aspekt ermöglicht es somit, die Abweichung besonders einfach und zeitgünstig zumindest zu verringern oder aufzuheben.

Die zuvor genannte Maßnahme, um die Abweichung der Ausrichtung des Fahrzeugs, insbesondere der Oberfläche, relativ zu der horizontalen Ebene zumindest zu verringern oder aufzuheben, kann insbesondere Folgendes umfassen. Mit anderen Worten kann beispielsweise Folgendes durchgeführt werden, um die Abweichung zumindest zu verringern oder aufzuheben: Um die Abweichung zu verringern oder aufzuheben, wird beispielsweise zumindest ein Teil des Fahrzeugs, insbesondere zumindest ein Teilbereich des Aufbaus, relativ zu einer einfach auch als Untergrund bezeichneten Untergrund- oder Bodenfläche bewegt, auf welcher das Fahrzeug steht, insbesondere stillsteht, und somit in Fahrzeughochrichtung nach unten hin abgestützt. Beispielsweise wird zum Verringern oder Aufheben der Abweichung das Fahrzeug oder der Aufbau derart relativ zu dem Untergrund bewegt, insbesondere während das Fahrzeug stillsteht, mithin sich nicht relativ zu dem Untergrund bewegt, dass der Aufbau an wenigstens einer Stelle in vertikaler Richtung nach oben bewegt und somit von dem Untergrund wegbewegt, mithin angehoben wird oder in vertikaler Richtung nach unten bewegt und somit auf den Untergrund zubewegt, mithin abgesenkt wird. Alternativ oder zusätzlich wird beispielsweise zum Verringern oder Aufheben der Abweichung der Aufbau an wenigstens einer anderen, zweiten Stelle angehoben oder abgesenkt. Durch das Verfahren gemäß dem ersten Aspekt kann sich die Person nun außerhalb des Innenraums und somit außerhalb des Fahrzeugs zu der jeweiligen Stelle begeben und den Aufbau an der Stelle anheben oder absenken, insbesondere während das erste mobile Endgerät in dem Innenraum und dabei insbesondere auf der Oberfläche angeordnet ist und die Daten bereitstellen. Insbesondere kann sich die Person außerhalb des Fahrzeugs relativ zu dem Fahrzeug bewegen und sich dadurch zu jeweiligen, mehreren Stellen, an denen der Aufbau anzuheben oder abzusenken ist, um die Abweichung zu verringern oder aufzuheben, begeben, ohne sich nach jedem Anheben oder Absenken einer Stelle und vor dem Anheben oder Absenken einer anderen Stelle zu dem ersten mobilen Endgerät bewegen und das erste mobile Endgerät konsultieren zu müssen.

Das Verfahren gemäß dem ersten Aspekt ermöglicht auch deswegen eine besonders einfache, kostengünstige und komfortable Nivellierung des Fahrzeugs, da das Verfahren gemäß dem ersten Aspekt nicht eine spezielle für das Nivellieren des Fahrzeugs hergestellte und ausschließlich für das Nivellieren des Fahrzeugs ausgebildete oder verwendbare Einrichtung verwendet, sondern das Verfahren gemäß dem ersten Aspekt verwendet das erste mobile Endgerät, welches eben nicht nur zum Nivellieren des Fahrzeugs verwendbar ist, sondern das erste mobile Endgerät kann sich auch leitungslos mit dem Mobilfunknetz verbinden und somit dazu genutzt werden, um über das Mobilfunknetz leitungslos weitere Daten mit wenigstens einer weiteren, mit dem Mobilfunknetz zumindest mittelbar verbundenen Einheit auszutauschen.

Vorzugsweise charakterisieren die von dem ersten mobilen Endgerät bereitgestellten und an das zweite mobile Endgerät übermittelten Daten die Abweichung. Ganz vorzugsweise charakterisieren die Daten bereits die Maßnahme, durch welche, das heißt durch deren Durchführung die Abweichung zumindest verringert oder aufgehoben werden kann. Somit ist es denkbar, dass dem zweiten mobilen Endgerät, welches vorzugsweise die Daten empfängt, anhand der Daten bereits die Abweichung und nicht die Maßnahme oder gar bereits die Maßnahme mitgeteilt wird. Möglich wäre jedoch ebenfalls, dass das zweite mobile Endgerät anhand der Daten, welche beispielsweise zunächst die insbesondere aktuelle Ausrichtung und nicht die Abweichung und nicht die Maßnahme charakterisieren, die Abweichung und/oder die Maßnahme ermittelt, insbesondere berechnet. Vorzugsweise wird durch wenigstens oder genau eines der mobilen Endgeräte die Abweichung ermittelt, und vorzugsweise wird durch wenigstens oder genau eines der mobilen Endgeräte die Maßnahme ermittelt, sodass auf Basis der Abweichung und der Maßnahme die Abweichung zumindest verringert oder aufgehoben und somit das Fahrzeug nivelliert werden kann.

Um das Fahrzeug besonders einfach, zeit- und kostengünstig und besonders komfortabel nivellieren zu können, ist es bei einer Ausführungsform des ersten Aspekts vorgesehen, dass das erste mobile Endgerät dazu ausgebildet ist, in einem Zustand, in welchem das erste mobile Endgerät mittels des Mobilfunkmoduls leitungslos mit dem Mobilfunknetz verbunden ist, über das Mobilfunknetz eine Sprachkommunikation, das heißt ein Telefongespräch, mit dem zweiten mobilen Endgerät und/oder einem dritten mobilen Endgerät durchzuführen. Somit ist es vorzugsweise vorgesehen, dass das erste mobile Endgerät ein auch als Handy bezeichnetes Mobiltelefon ist. Insbesondere ist das erste mobile Endgerät ein sogenanntes Smartphone (schlaues Telefon), mithin ein Mobiltelefon mit umfangreichen Computer-Funktionalitäten und Konnektivitäten. Ganz vorzugsweise weist das erste mobile Endgerät wenigstens ein Mikrofon auf, mittels welchem die Sprachkommunikation durchgeführt werden kann. Insbesondere umfasst das erste mobile Endgerät den zuvor genannten Lautsprecher und das Mikrofon, welches zusätzlich zu dem Lautsprecher vorgesehen ist. Das Verfahren gemäß dem ersten Aspekt vermeidet es somit, ein nur für das Nivellieren des Fahrzeugs vorgesehenes und hergestelltes Gerät zu verwenden. Stattdessen nutzt das Verfahren gemäß dem ersten Aspekt das auch für andere, von dem Nivellieren des Fahrzeugs unterschiedliche Zwecke ausgebildete, vorgesehene und hergestellte und somit ohnehin hergestellte, erste mobile Endgerät, wodurch das Fahrzeug besonders komfortabel und kostengünstig nivelliert werden kann.

Eine weitere Ausführungsform des ersten Aspekts zeichnet sich dadurch aus, dass in Abhängigkeit von den Daten mittels einer Wiedergabeeinrichtung des zweiten mobilen Endgeräts wenigstens ein die Ausrichtung und/oder die Abweichung und/oder die Maßnahme charakterisierendes Signal an eine Umgebung des zweiten mobilen Endgeräts ausgegeben wird. Zumindest bei dieser Ausführungsform gehört das zweite mobile Endgerät zu dem Verfahren gemäß dem ersten Aspekt beziehungsweise das Verfahren gemäß dem ersten Aspekt verwendet auch das zweite mobile Endgerät, welches vorzugsweise die Daten empfängt. Die vorigen und folgenden Ausführungen zu dem ersten mobilen Endgerät können ohne Weiteres auch das zweite mobile Endgerät übertragen werden und umgekehrt. Somit ist es insbesondere denkbar, dass das zweite mobile Endgerät wenigstens einen weiteren Prozessor aufweist, mittels welchem das zuvor genannte Programm, insbesondere eine Kopie des Programms, oder ein anderes Programm ausgeführt werden kann, die das zweite mobile Endgerät beziehungsweise dessen weiteren Prozessor dazu veranlassen, das Verfahren gemäß dem ersten Aspekt auszuführen oder durchzuführen. Beispielsweise umfasst die Wiedergabeeinrichtung des zweiten mobilen Endgeräts eine weitere, elektrische oder elektronische Anzeige, welche beispielsweise als weiterer, berührungsempfindlicher Bildschirm ausgebildet sein kann. Alternativ oder zusätzlich umfasst beispielsweise die Wiedergabeeinrichtung des zweiten mobilen Endgeräts wenigstens einen weiteren Lautsprecher. Da vorzugsweise das zweite mobile Endgerät mittels der Wiedergabeeinrichtung das die Ausrichtung und/oder die Abweichung und/oder die Maßnahme charakterisierende und auch als Ausgabesignal bezeichnete Signal an die Umgebung des zweiten mobilen Endgeräts ausgibt, kann das Ausgabesignal beziehungsweise die Ausrichtung und/oder die Abweichung und/oder die Maßnahme der zuvor genannten Person besonders einfach und komfortabel kommuniziert werden. Durch das Ausgeben des Ausgabesignals kann die Person besonders einfach dazu angeleitet werden, sich zu der jeweiligen Stelle zu begeben und den Aufbau an der Stelle abzusenken oder anzuheben, sodass das Fahrzeug besonders einfach und komfortabel nivelliert werden kann.

Das zweite mobile Endgerät ist ein bezüglich des ersten mobilen Endgeräts externe Endgerät, und das erste mobile Endgerät ist ein bezüglich des zweiten mobilen Endgeräts externe Endgerät. Ferner ist es vorzugsweise vorgesehen, dass das zweite mobile Endgerät ein zweites Mobilfunkmodul aufweist, mittels welchem das zweite mobile Endgerät leitungslos, das heißt ohne eine körperliche beziehungsweise physisch vorhandene Leitung mit dem Mobilfunknetz verbunden oder verbindbar ist. Bei dem zweiten mobilen Endgerät kann es sich beispielsweise um einen insbesondere mobilen, das heißt tragbaren, zweiten PC (Personal Computer - persönlicher Computer oder persönlicher Rechner) handeln, wobei der zweite PC insbesondere ein auch als Tabletcomputer, Tablet-PC oder Flachrechner bezeichnetes, zweites Tablet sein kann. Ganz vorzugsweise weist auch das zweite mobile Endgerät die wenigstens oder genau eine auch als zweiter oder weiterer Bildschirm bezeichnete, zweite oder weitere elektrische oder elektronische Anzeige auf, die besonders bevorzugt als ein auch als Berührbildschirm oder Touchscreen bezeichneter, berührungsempfindlicher Bildschirm ausgebildet ist. Das zweite mobile Endgerät kann sich dabei vorzugsweise mittels des zweiten Mobilfunkmoduls leitungslos mit der jeweiligen Funkzelle und somit über die jeweilige Funkzelle mit dem Mobilfunknetz verbinden, um beispielsweise über das Mobilfunknetz Daten beispielsweise mit wenigstens einer anderen, mit dem Mobilfunknetz verbundenen Recheneinheit auszutauschen. Wird das zweite mobile Endgerät relativ zu der Erdoberfläche bewegt, beispielsweise derart, dass das zweite mobile Endgerät aus der ersten Funkzelle herausbewegt und in die zweite Funkzelle hineinbewegt wird, so werden das zweite Mobilfunkmodul und somit das zweite mobile Endgerät von der ersten Zelle getrennt und mit der zweiten Zelle leitungslos verbunden. Dadurch kann das zweite mobile Endgerät beispielsweise in dem Land, in welchem das Mobilfunknetz gebildet ist, große Strecken von beispielsweise hundert oder tausend Kilometern relativ zu der Erdoberfläche umherbewegt werden, wobei das vorzugsweise als Mobilfunkgerät ausgebildete, zweite mobile Endgerät mit dem Mobilfunknetz leitungslos verbunden bleibt, insbesondere dadurch, dass sich das zweite Mobilfunkmodul abwechselnd von einer der Zellen trennt und mit einer anderen der Zellen leitungslos verbindet. Bei dem Verfahren gemäß dem ersten Aspekt kann das zweite mobile Endgerät mittels des zweiten Mobilfunkmoduls leitungslos mit dem Mobilfunknetz verbunden sein oder das zweite mobile Endgerät ist während des Verfahrens gemäß dem ersten Aspekt von dem Mobilfunknetz getrennt, jedoch weist in beiden Fällen das zweite mobile Endgerät das zweite Mobilfunkmodul auf, welches leitungslos mit dem Mobilfunknetz verbunden oder verbindbar ist.

Um das Fahrzeug besonders einfach, zeit- und kostengünstig und besonders komfortabel nivellieren zu können, ist es bei einer Ausführungsform des ersten Aspekts vorgesehen, dass das zweite mobile Endgerät dazu ausgebildet ist, in einem Zustand, in welchem das zweite mobile Endgerät mittels des zweiten Mobilfunkmoduls leitungslos mit dem Mobilfunknetz verbunden ist, über das Mobilfunknetz die zuvor genannte Sprachkommunikation, das heißt das Telefongespräch, mit dem ersten mobilen Endgerät und/oder dem dritten mobilen Endgerät durchzuführen. Somit ist es vorzugsweise vorgesehen, dass das zweite mobile Endgerät ein auch als Handy bezeichnetes, zweites Mobiltelefon ist. Insbesondere ist das zweite mobile Endgerät ein sogenanntes Smartphone (schlaues Telefon), mithin ein Mobiltelefon mit umfangreichen Computer-Funktionalitäten und Konnektivitäten. Ganz vorzugsweise weist das zweite mobile Endgerät wenigstens ein zweites Mikrofon auf, mittels welchem die Sprachkommunikation durchgeführt werden kann. Insbesondere umfasst das zweite mobile Endgerät den zuvor genannten, weiteren Lautsprecher und das zweite Mikrofon, welches zusätzlich zu dem weiteren Lautsprecher vorgesehen ist. Der erste Aspekt vermeidet es somit, ein nur für das Nivellieren des Fahrzeugs vorgesehenes und hergestelltes Gerät zu verwenden. Stattdessen nutzt der erste Aspekt das auch für andere, von dem Nivellieren des Fahrzeugs unterschiedliche Zwecke ausgebildete, vorgesehene und hergestellte und somit ohnehin hergestellte, zweite mobile Endgerät, wodurch das Fahrzeug besonders komfortabel und kostengünstig nivelliert werden kann.

Bei einer weiteren, besonders vorteilhaften Ausführungsform des ersten Aspekts umfasst das Ausgabesignal wenigstens ein die Ausrichtung und/oder die Abweichung und/oder die Maßnahme charakterisierendes, optisches Signal, welches auf der elektrischen oder elektronischen Anzeige der Wiedergabeeinrichtung des zweiten mobilen Endgeräts angezeigt wird. Das Ausgabesignal und somit die Ausrichtung und/oder die Abweichung und/oder die Maßnahme wird somit der Person besonders einfach und nachvollziehbar kommuniziert, sodass die Person beispielsweise die Maßnahme an der jeweiligen Stelle einfach und komfortabel durchführen kann. Insbesondere kann der Person das Ausgabesignal kommuniziert werden, während sich die Person und das zweite mobile Endgerät außerhalb des Fahrzeugs befinden, während sich das erste mobile Endgerät innerhalb des Fahrzeugs, insbesondere innerhalb des Innenraums, befindet und während das erste mobile Endgerät an, insbesondere auf, der Oberfläche angeordnet ist und Relativbewegungen zwischen dem ersten mobilen Endgerät und der Oberfläche unterbleiben.

Als besonders vorteilhaft hat es sich bei dem ersten Aspekt gezeigt, wenn das Ausgabesignal wenigstens eine die Ausrichtung und/oder die Abweichung und/oder die Maßnahme charakterisierende Sprachausgabe umfasst, welche mittels wenigstens eines Lautsprechers wie beispielsweise des zuvor genannten Lautsprechers der Wiedergabeeinrichtung an die Umgebung ausgegeben wird. Hierdurch kann die Person, insbesondere während sie sich außerhalb des Fahrzeugs befindet, zu der Maßnahme angeleitet werden, ohne dass die Person das zweite mobile Endgerät oder das erste mobile Endgerät aufwendig handhaben oder anschauen muss. Hierdurch kann das Fahrzeug besonders einfach und komfortabel nivelliert werden.

Um das Fahrzeug besonders einfach und komfortabel nivellieren zu können, ist es in weiterer Ausgestaltung des ersten Aspekts vorgesehen, dass mittels des Ausgabesignals optisch und somit beispielsweise über die elektrische oder elektronische Anzeige der Wiedergabeeinrichtung und/oder akustisch und somit über den Lautsprecher der Wiedergabeeinrichtung des zweiten mobilen Endgeräts kommuniziert wird, an welcher Stelle, insbesondere an welcher Achse und/oder an welchem einfach auch als Rad bezeichneten Fahrzeugrad des Fahrzeugs die Maßnahme zum Verringern oder Aufheben der Abweichung, insbesondere von der Person, durchzuführen, das heißt zu ergreifen oder umzusetzen ist. Unter der genannten Achse und dem genannten Rad ist insbesondere Folgendes zu verstehen: Beispielsweise ist das Fahrzeug ein Landfahrzeug, welches wenigstens oder genau eine Achse in Form der zuvor genannten Achse aufweist. Die Achse weist wenigstens oder genau zwei insbesondere in Fahrzeugquerrichtung voneinander beabstandete und auf in Fahrzeugquerrichtung einander gegenüberliegenden Seiten des Fahrzeugs angeordnete Räder auf, von denen ein Rad das zuvor genannte Rad des Fahrzeugs ist. Das jeweilige Rad ist ein Bodenkontaktelement, wobei das Fahrzeug über die Bodenkontaktelemente in Fahrzeughochrichtung nach unten hin an dem zuvor genannten Untergrund abstützbar oder abgestützt ist, insbesondere derart, dass die Bodenkontaktelemente den Untergrund direkt berühren. Die Räder sind um eine jeweilige Raddrehachse relativ zu dem Aufbau drehbar. Dabei ist es insbesondere vorgesehen, dass die Räder koaxial zueinander angeordnet sind, sodass die Raddrehachsen vorzugsweise zusammenfallen. Wird das Fahrzeug entlang des Untergrunds und somit relativ zu dem Untergrund bewegt, insbesondere gefahren, während das Fahrzeug über seine Bodenkontaktelemente in Fahrzeughochrichtung nach unten hin an dem Untergrund abgestützt ist, so rollen die Räder an dem Boden ab. Das Fahrzeug kann insbesondere dadurch besonders effektiv und effizient nivelliert werden, dass die zuvor genannte Stelle die Achse, insbesondere eines der Räder, ist, das heißt, dass die zuvor genannte Stelle eine Stelle der Achse, insbesondere des Rads, ist. Hintergrund dieser Ausführungsform ist beispielsweise, dass mittels einer Hebeeinrichtung die Achse beziehungsweise das Rad in vertikaler Richtung relativ zu dem Untergrund bewegt und somit angehoben und abgesenkt werden kann. Die Achse beziehungsweise das Rad stellt dabei einen vorteilhaften und insbesondere stabilen Angriffspunkt dar, an welchem eine gegebenenfalls auch hohe Kraft auf das Fahrzeug ausgeübt werden kann, um das Fahrzeug beziehungsweise den Aufbau zu nivellieren, das heißt anzuheben oder abzusenken. Dadurch, dass mittels des Ausgabesignals optisch und/oder akustisch kommuniziert, das heißt an die Umgebung ausgegeben wird, an welcher Stelle des Fahrzeugs die Maßnahme durchzuführen ist, kann die Person besonders präzise angeleitet werden, um die Maßnahme durchzuführen. Dadurch kann die Person präzise, einfach und komfortabel und mit einem geringen Kraftaufwand und/oder mit einer nur geringen Anzahl an Arbeitsschritten das Fahrzeug nivellieren.

In weiterer, besonders vorteilhafter Ausgestaltung des ersten Aspekts ist es vorgesehen, dass mittels des Ausgabesignals optisch und/oder akustisch wenigstens eine Stelle, insbesondere die zuvor genannte Stelle, des Fahrzeugs sowie wenigstens ein Maß kommuniziert werden, um welches zumindest ein Teilbereich des Fahrzeugs in vertikaler Richtung nach oben und unten zu bewegen ist, um die Abweichung zumindest zu verringern oder aufzuheben. Bei dem Teilbereich des Fahrzeugs kann es sich um den Aufbau oder um einen Teilbereich des Aufbaus handeln. Dieser Ausführungsform liegt die Idee zugrunde, der Person mittels des Ausgabesignals nicht nur die Maßnahme und die Stelle, an welcher die Maßnahme umsetzen beziehungsweise durchzuführen ist, zu kommunizieren, sondern auch das Maß und somit auch einen Umfang der Maßnahme. Unter dem Maß beziehungsweise dem Umfang der Maßnahme ist insbesondere eine Weg- und/oder Streckenangabe, das heißt eine Längenangabe zu verstehen, um welche beispielsweise der Teilbereich in vertikaler Richtung nach oben oder unten zu bewegen ist. Alternativ oder zusätzlich kann das Maß eine Zeitdauer umfassen, während welcher beispielsweise die zuvor genannte Hebeeinrichtung, insbesondere durchgängig, zu betreiben ist, um dadurch den Teilbereich in vertikaler Richtung nach oben oder unten zu bewegen. Alternativ oder zusätzlich kann das Maß eine Anzahl an Arbeitsschritten oder Arbeitsvorgängen umfassen, die durchzuführen sind, um den Teilbereich in vertikaler Richtung nach oben oder unten zu bewegen. Bei den Arbeitsvorgängen kann es sich beispielsweise um von der Person durchzuführende Arbeitsvorgänge handeln, um beispielsweise ein Betätigungselement, insbesondere der Hebeeinrichtung, zu bewegen, insbesondere zu drehen und/oder translatorisch zu bewegen, um dadurch den Teilbereich in vertikaler Richtung nach oben oder unten zu bewegen. Somit kann die Person präzise angeleitet werden, um das Fahrzeug zu nivellieren, sodass das Fahrzeug einfach und komfortabel und präzise nivelliert werden kann.

Um das Fahrzeug besonders einfach und komfortabel nivellieren zu können, ist es in weiterer Ausgestaltung des ersten Aspekts vorgesehen, dass die Daten über eine leitungslos Datenverbindung mittels des ersten mobilen Endgeräts gesendet und mittels des zweiten mobilen Endgeräts empfangen werden. Hierdurch kann sich die Person außerhalb des Fahrzeugs relativ zu dem Fahrzeug und relativ zu dem ersten mobilen Endgerät bewegen und dabei das zweite mobile Endgerät mit sich führen, ohne dass die Person in ihrer Bewegung durch Kabel, Leitungen oder dergleichen behindert wird. Beispielsweise werden die Daten über die leitungslose Datenverbindung und dabei über das Mobilfunknetz mittels des ersten mobilen Endgeräts gesendet.

Als besonders vorteilhaft hat es sich bei dem ersten Aspekt jedoch gezeigt, wenn die Daten über eine direkt zwischen den mobilen Endgeräten hergestellte, leitungslose Datenverbindung und dabei ohne Verwendung des Mobilfunknetzes mittels des ersten mobilen Endgeräts gesendet und mittels des zweiten mobilen Endgeräts empfangen werden. Dadurch können die Daten besonders schnell an das zweite mobile Endgerät gesendet und von diesem empfangen werden, sodass die Person das Fahrzeug besonders einfach, komfortabel und zeitgünstig nivellieren kann. Die direkt zwischen den mobilen Endgeräten hergestellte, leitungslose Datenverbindung erfolgt beispielsweise über Bluetooth oder eine andere, ähnlich Technik, die einen Datenaustausch zwischen den mobilen Endgeräten über eine geringe Entfernung hinweg ermöglicht.

Schließlich hat es sich bei dem ersten Aspekt als besonders vorteilhaft gezeigt, wenn mittels des ersten mobilen Endgeräts zumindest die Ausrichtung des Fahrzeugs relativ zu der horizontalen Ebene und/oder die Abweichung ermittelt wird. Beispielsweise umfasst das erste mobile Endgerät ein Ermittlungsmodul, welches beispielsweise eine sogenannte elektronische Wasserwaage ist. Dabei ist es vorzugsweise vorgesehen, dass das Verfahren gemäß dem ersten Aspekt beziehungsweise das zuvor genannte Programm das Ermittlungsmodul und somit die elektronische Wasserwaage des ersten mobilen Endgeräts nutzt. Mittels der elektronischen Wasserwaage (Ermittlungsmodul) des ersten mobilen Endgeräts wird beispielsweise eine Abweichung einer insbesondere aktuellen Ausrichtung des ersten mobilen Endgeräts relativ zu der horizontalen Ebene ermittelt, insbesondere erfasst, das heißt gemessen. Insbesondere dann, wenn das erste mobile Endgerät an dem Fahrzeug, insbesondere an und ganz insbesondere auf der Oberfläche, angeordnet ist, entspricht die mittels des Ermittlungsmoduls ermittelte, insbesondere aktuelle, Ausrichtung des ersten mobilen Endgeräts relativ zu der horizontalen Ebene der, insbesondere aktuellen, Ausrichtung des Fahrzeugs, insbesondere der Oberfläche, relativ zu der horizontalen Ebene. Hierdurch kann die insbesondere aktuelle Ausrichtung des Fahrzeugs relativ zu der horizontalen Ebene mittels des ersten mobilen Endgeräts ermittelt werden. Insbesondere kann mittels des Ermittlungsmoduls eine Abweichung der insbesondere aktuellen Ausrichtung des ersten mobilen Endgeräts relativ zur horizontalen Ebene ermittelt werden, wobei insbesondere dann, wenn das erste mobile Endgerät an dem Fahrzeug, insbesondere an und ganz insbesondere auf der Oberfläche, angeordnet ist, die Abweichung der Ausrichtung des ersten mobilen Endgeräts relativ zu der horizontalen Ebene der Abweichung des Fahrzeugs relativ zu der horizontalen Ebene entspricht. Somit können mittels des ersten mobilen Endgeräts die Ausrichtung des Fahrzeugs relativ zu der horizontalen Ebene und die Abweichung der Ausrichtung des Fahrzeugs von der horizontalen Ebene ermittelt werden. In der Folge können die Daten die mittels des ersten mobilen Endgeräts ermittelte Ausrichtung und/oder die mittels des ersten mobilen Endgeräts ermittelte Abweichung charakterisieren, sodass dann, wenn das zweite mobile Endgerät die Daten empfängt, dem zweiten mobilen Endgerät gleich die Ausrichtung und/oder die Abweichung mitgeteilt wird. Somit muss das zweite mobile Endgerät die Abweichung und/oder die Ausrichtung nicht selbst ermitteln. Insbesondere ist es denkbar, dass das erste mobile Endgerät auch die Maßnahme ermittelt, insbesondere berechnet, sodass die Daten auch bereits vorzugsweise die Maßnahme charakterisieren. Somit wird beispielsweise dem zweiten mobilen Endgerät bereits die Maßnahme mitgeteilt, sodass das zweite mobile Endgerät die Maßnahme nicht mehr ermitteln muss. Dadurch kann das Fahrzeug besonders einfach und zeitgünstig nivelliert werden.

Ein zur Erfindung gehörender, zweiter Aspekt betrifft ein Verfahren zum Nivellieren eines Fahrzeugs. Vorteile und vorteilhafte Ausgestaltungen des ersten Aspekts sind als Vorteile und vorteilhafte Ausgestaltungen des zweiten Aspekts anzusehen und umgekehrt. Somit können die vorigen und folgenden Ausführungen zum ersten Aspekt ohne Weiteres auch auf den zweiten Aspekt übertragen werden und umgekehrt.

Bei dem erfindungsgemäßen Verfahren des zweiten Aspekts werden mittels wenigstens einer bezüglich des Fahrzeugs externen und als ein unabhängig von dem Fahrzeug vollständig zusammengebautes Modul ausgebildeten Nivelliervorrichtung Daten empfangen, insbesondere während die Nivelliervorrichtung außerhalb des Fahrzeugs und somit außerhalb des zuvor genannten Innenraums angeordnet ist. Insbesondere empfängt die Nivelliervorrichtung wenigstens ein insbesondere elektrisches oder elektronisches Signal, welches die Daten charakterisiert oder umfasst. Beispielsweise kann es sich bei der Nivelliervorrichtung um die zuvor genannte Hebeeinrichtung handeln. Die Daten, die mittels, das heißt von der Nivelliervorrichtung empfangen werden, charakterisieren eine insbesondere aktuelle Ausrichtung des Fahrzeugs relativ zu einer horizontalen Ebene. Alternativ oder zusätzlich charakterisieren die Daten eine Abweichung der Ausrichtung von der horizontalen Ebene, und/oder die Daten charakterisieren wenigstens eine Maßnahme, durch welche die Abweichung zumindest verringert oder aufgehoben werden kann.

Des Weiteren ist es bei dem Verfahren des zweiten Aspekts vorgesehen, dass mittels der Nivelliervorrichtung die Abweichung automatisch zumindest verringert oder aufgehoben wird, indem in Abhängigkeit von den empfangenen Daten wenigstens ein Aktor der Nivelliervorrichtung betrieben wird, wodurch wenigstens ein Betätigungselement der Nivelliervorrichtung relativ zum wenigstens einen Basiselement der Nivelliervorrichtung und dadurch zumindest ein Teilbereich des Fahrzeugs zumindest in vertikaler Richtung und/oder in Fahrzeughochrichtung und dabei insbesondere relativ zu dem zuvor genannten Untergrund bewegt werden. Beispielsweise ist die Nivelliervorrichtung über das Basiselement zumindest mittelbar, insbesondere direkt, an dem zuvor genannten Untergrund abgestützt, insbesondere derart, dass das Basiselement zumindest mittelbar, insbesondere direkt, an dem Untergrund abgestützt ist. Hierdurch kann beispielsweise eine zum Anheben oder Absenken des Teilbereichs des Fahrzeugs vorgesehene Kraft einerseits von dem Betätigungselement auf das Fahrzeug beziehungsweise den Teilbereich übertragen und andererseits über das Basiselement an dem Untergrund abgestützt und dabei insbesondere von dem Betätigungselement an das Basiselement und von dem Basiselement an den Untergrund übertragen werden, wodurch der Teilbereich vorteilhaft angehoben oder abgesenkt werden kann.

Da die Nivelliervorrichtung ein unabhängig von dem Fahrzeug vollständig zusammengebautes und bezüglich des Fahrzeugs externes Modul ist, ist die Nivelliervorrichtung kein Bestandteil des Fahrzeugs und insbesondere nicht fest an oder in dem Fahrzeug verbaut, sondern die Nivelliervorrichtung kann beispielsweise bedarfsgerecht an dem Fahrzeug angeordnet werden und in der Folge das Fahrzeug nivellieren. Durch das Nivellieren des Fahrzeugs wird das Fahrzeug in einen nivellierten Zustand gebracht, in welchem die Ausrichtung des Fahrzeugs nicht oder nur geringfügig von der horizontalen Ebene abweicht. Insbesondere wird beispielsweise nach dem Nivellieren des Fahrzeugs das Fahrzeug in dem nivellierten Zustand mittels der Nivelliervorrichtung gehalten. Um beispielsweise das Fahrzeug wieder entlang des Untergrunds fahren zu können, wird der nivellierte Zustand aufgehoben, und die Nivelliervorrichtung wird von dem Fahrzeug entfernt. Daraufhin kann die Nivelliervorrichtung beispielsweise in dem Fahrzeug verstaut werden und mittels des Fahrzeugs transportiert werden. Der zweite Aspekt ermöglicht eine besonders einfache, komfortable und präzise Nivellierung des Fahrzeugs, da das Fahrzeug mittels der Nivelliervorrichtung automatisch und somit, insbesondere was das Nivellieren an sich angeht, ohne Zutun einer Person nivelliert werden kann.

Um das Fahrzeug besonders einfach und zeitgünstig nivellieren zu können, ist es bei einer Ausführungsform des zweiten Aspekts vorgesehen, dass der Aktor mittels elektrischer Energie betrieben wird, welche in einem elektrischen Energiespeicher der Nivelliervorrichtung selbst gespeichert ist. Somit ist der elektronische Energiespeicher vorzugsweise als eine Batterie, insbesondere als eine Sekundärbatterie, ausgebildet. Die Nivelliervorrichtung kann somit zumindest nahezu vollständig unabhängig von dem Fahrzeug beziehungsweise autark betrieben werden, sodass das Fahrzeug besonders einfach, komfortabel und zeitgünstig nivelliert werden kann.

Eine weitere Ausführungsform des zweiten Aspekts zeichnet sich dadurch aus, dass mittels der Nivelliervorrichtung die Daten über eine leitungslose Datenverbindung und somit leitungslos empfangen werden. Dadurch kann die Nivelliervorrichtung besonders einfach gehandhabt, mithin relativ zu dem Fahrzeug bewegt werden, ohne dass dies durch körperliche Leitungen beeinträchtigt wird.

In weiterer, besonders vorteilhafter Ausgestaltung des zweiten Aspekts umfassen bereits die mittels der Nivelliervorrichtung empfangenen Daten wenigstens ein Ansteuersignal, mittels welchen der Aktor angesteuert und dadurch betrieben wird, insbesondere ohne die Daten durch die Nivelliervorrichtung verarbeiten und in ein Ansteuersignal zum Ansteuern des Aktors umwandeln zu müssen. Hierdurch kann beispielsweise eine Ansteuerlogik oder Elektronik der Nivelliervorrichtung vermieden oder besonders einfach und somit kostengünstig ausgestaltet werden, sodass die Nivelliervorrichtung besonders einfach und somit komfortabel und zeitgünstig gehandhabt werden kann.

Schließlich hat es sich bei dem zweiten Aspekt als besonders vorteilhaft gezeigt, wenn bereits die mittels der Nivelliervorrichtung empfangenen Daten wenigstens eine Zeitspanne, während welcher der Aktor unterbrechungsfrei, das heißt durchgängig zu betreiben ist, und/oder wenigstens eine Stromstärke eines elektrischen Stroms, mit welchem der Aktor zu versorgen ist, um dadurch den Aktor zu betreiben, umfassen. Dadurch kann die Nivelliervorrichtung an sich besonders einfach und somit kosten- und gewichtsgünstig ausgestaltet werden, sodass sie beispielsweise von einer oder der zuvor genannten Person besonders einfach gehandhabt werden kann. Dadurch kann das Fahrzeug besonders einfach, zeitgünstig und komfortabel nivelliert werden.

Vorzugsweise gehört zur Erfindung auch ein einfach auch als Computerprogramm bezeichnetes Computerprogrammprodukt, umfassend Befehle, die bei der Ausführung des Computerprogrammprodukts durch einen Computer, wie beispielsweise das jeweilige mobile Endgerät beziehungsweise den jeweiligen Prozessor, den Computer veranlassen, das jeweilige Verfahren gemäß dem ersten beziehungsweise zweiten Aspekt auszuführen.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Seitenansicht eines Fahrzeugs, welches mittels eines nicht zur Erfindung gehörenden, ersten Verfahrens nivelliert, das heißt relativ zu einer horizontalen Ebene ausgerichtet wird;
- Fig. 2: eine schematische Darstellung von zwei mobilen Endgeräten, die bei dem ersten Verfahren verwendet werden; und
- Fig. 3: eine weitere schematische Seitenansicht des Fahrzeugs, welches gemäß einem zweiten Verfahren nivelliert wird.

In den Figuren sind gleiche oder funktionsgleiche Elemente mit gleichen Bezugszeichen versehen.

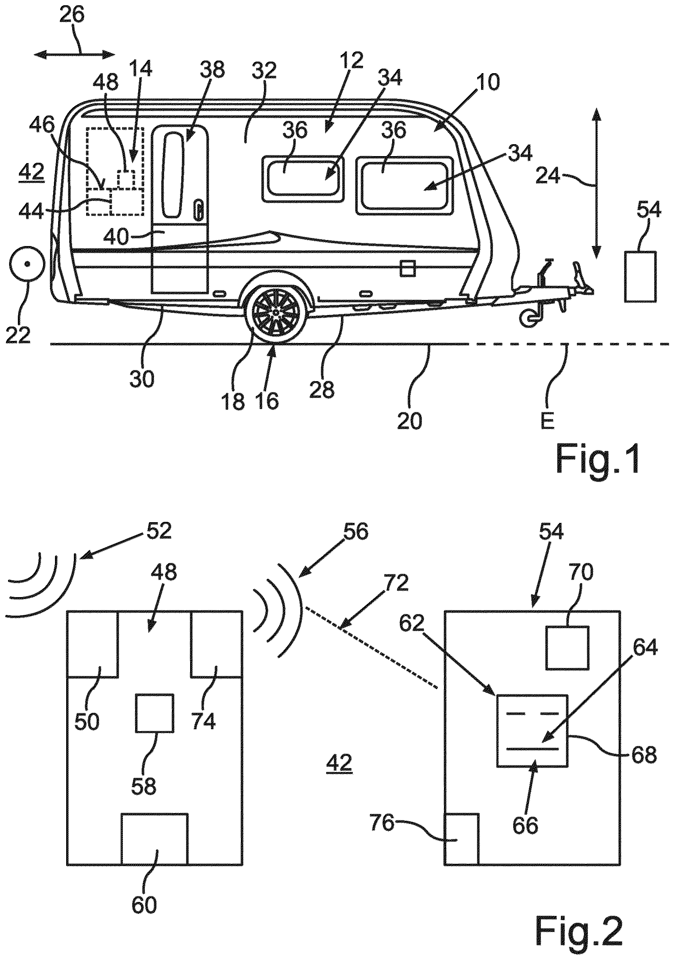

Fig. 1 zeigt in einer schematischen Seitenansicht ein Fahrzeug 10, welches bei dem in Fig. 1 gezeigten Ausführungsbeispiel als ein auch als Caravan bezeichneter Wohnwagen ausgebildet ist. Das Fahrzeug 10 weist einen Aufbau 12 auf, durch welchen ein in Fig. 1 teilweise erkennbarer Innenraum 14 des Fahrzeugs 10 begrenzt ist. Das Fahrzeug 10 umfasst wenigstens oder genau eine Achse 16, welche wenigstens oder genau zwei in Fahrzeugquerrichtung voneinander beabstandete und auf in Fahrzeugquerrichtung einander gegenüberliegenden Seiten des Fahrzeugs 10 angeordnete, einfach auch als Räder bezeichnete Fahrzeugräder aufweist. Von den Rädern des Fahrzeugs 10 ist in Fig. 1 ein mit 18 bezeichnetes Rad der Achse 16 erkennbar. Die vorigen und folgenden Ausführungen zum Rad 18 können ohne Weiteres auch auf das andere Rad der Achse 16 übertragen werden und umgekehrt. Aus Fig. 1 ist außerdem erkennbar, dass das Rad 18 ein Bodenkontaktelement ist, welches in Fahrzeughochrichtung nach unten direkt an einem auch als Boden bezeichneten Untergrund 20 abgestützt ist. Die Fahrzeugquerrichtung des Fahrzeugs 10 ist in Fig. 1 durch einen Doppelpfeil 22 veranschaulicht, und die Fahrzeughochrichtung des Fahrzeugs 10 ist in Fig. 1 durch einen Doppelpfeil 24 veranschaulicht. Es ist erkennbar, dass die Fahrzeughochrichtung senkrecht zur Fahrzeugquerrichtung verläuft. Außerdem veranschaulicht in Fig. 1 ein Doppelpfeil 26 die Fahrzeuglängsrichtung des Fahrzeugs 10, dessen Fahrzeuglängsrichtung senkrecht zur Fahrzeughochrichtung und senkrecht zur Fahrzeugquerrichtung verläuft. Das Fahrzeug 10 ist über seine Bodenkontaktelemente in Fahrzeughochrichtung nach unten hin an dem Untergrund 20 abgestützt. Die Fahrzeugräder sind drehbar an einem Fahrgestell 28 des Fahrzeugs 10 gehalten, sodass sich die Fahrzeugräder um eine jeweilige Raddrehachse relativ zu dem Fahrgestell 28 und auch relativ zu dem Aufbau 12 drehen können. Bei dem in Fig. 1 gezeigten Ausführungsbeispiel sind die Fahrzeugräder koaxial zueinander angeordnet, sodass die Raddrehachsen zusammenfallen. Bei dem in Fig. 1 gezeigten Ausführungsbeispiel ist der Aufbau 12 separat von dem Fahrgestell 28 ausgebildet und an dem Fahrgestell 28 befestigt. Insbesondere weist der Aufbau 12 einen auch als Aufbauboden bezeichneten Boden 30 auf, durch welchen der Innenraum 14 in Fahrzeughochrichtung nach unten hin begrenzt ist. Der Aufbau 12 weist auch Seitenwände auf, von denen in Fig. 1 eine mit 32 bezeichnete Seitenwand erkennbar ist. Die Seitenwände sind in Fahrzeugquerrichtung voneinander beabstandet und begrenzen den Innenraum 14 in Fahrzeugquerrichtung. Dabei weist die Seitenwand 32 voneinander beabstandete und voneinander getrennte Fensteröffnungen 34 auf, welche mit transparenten und beispielsweise als Kunststoff gebildeten Scheiben 36 verschließbar oder verschlossen sind. Außerdem weist die Seitenwand 32 eine Türöffnung 38 auf, welche mittels einer Tür 40 verschließbar oder verschlossen ist. Die Tür 40 ist bewegbar, insbesondere verschwenkbar, an der Seitenwand 32 gehalten. Über die Türöffnung 38 kann eine Person in den Innenraum 14 einsteigen und aus dem Innenraum 14 aussteigen und hierdurch aus dem Innenraum 14 an eine Umgebung 42 des Fahrzeugs 10 gelangen.

Beispielsweise ist in dem Innenraum 14 ein in Fig. 1 besonders schematisch dargestelltes Bauelement 44 des Fahrzeugs 10 angeordnet. Bei dem Bauelement 44 handelt es sich beispielsweise um einen Einrichtungsgegenstand, insbesondere um ein Möbelstück. Insbesondere kann es sich bei dem Bauelement 44 um einen Tisch handeln. Es ist erkennbar, dass das Bauelement 44 eine Oberfläche 46 aufweist, auf welcher beispielsweise Gegenstände, wie beispielsweise Getränkebehälter, angeordnet, mithin abgestellt werden können.

Um beispielsweise das Fahrzeug 10 während einer längeren Zeitspanne besonders gut verwenden zu können, um in dem Fahrzeug 10, das heißt in dem Innenraum 14 liegen, das heißt beispielsweise schlafen und/oder essen zu können, ist es vorteilhaft, das Fahrzeug 10 zu nivellieren, mithin relativ zu einer horizontale Ebene E auszurichten, beispielsweise derart, dass eine Abweichung einer Ausrichtung des Fahrzeugs 10 von der horizontalen Ebene E möglichst gering oder nicht vorhanden ist. Bei dem in Fig. 1 gezeigten Ausführungsbeispiel verläuft der Untergrund 20 horizontal, sodass vorliegend die horizontale Ebene E mit dem Untergrund 20 zusammenfällt. Insbesondere ist es wünschenswert, das Fahrzeug 10 und dabei insbesondere den Aufbau 12 derart zu nivellieren, das heißt derart zur horizontalen Ebene E auszurichten, dass die Oberfläche 46 des Bauelements 44 horizontal, mithin parallel zur Ebene E verläuft. Dadurch kann vermieden werden, dass auf der Oberfläche 46 abgestellte Gegenstände schwerkraftbedingt von der Oberfläche 46 herunterrutschen. Ferner kann vermieden werden, dass beispielsweise auf der Oberfläche 46 befindliche Flüssigkeiten schwerkraftbedingt von der Oberfläche 46 herabströmen und beispielsweise auf den Boden 30 tropfen.

Im Folgenden wird anhand von Fig. 1 und 2 ein erstes Verfahren zum Nivellieren des Fahrzeugs 10 beschrieben. Bei dem ersten Verfahren wird ein erstes mobiles Endgerät 48 verwendet, welches ein Mobilfunkmodul 50 aufweist, mittels welchem das erste mobile Endgerät 48 leitungslos mit einem in Fig. 2 besonders schematisch dargestellten Mobilfunknetz 52 verbunden oder verbindbar ist.

Mittels des ersten mobilen Endgeräts 48 werden an ein zweites mobiles Endgerät 54 Daten 56, insbesondere leitungslos, gesendet, insbesondere während sich das mobile Endgerät 48 in dem Innenraum 14 und das mobile Endgerät 54 außerhalb des Fahrzeugs 10 und dabei in dessen Umgebung 42 befindet. Vorzugsweise ist auch das mobile Endgerät 54 Bestandteil des ersten Verfahrens, wobei es insbesondere vorgesehen ist, dass das mobile Endgerät die Daten 56 empfängt. Insbesondere führt ein erster Prozessor des mobilen Endgeräts 48 ein Computerprogramm aus, welches das mobile Endgerät 48 derart betreibt, dass das mobile Endgerät 48 die Daten 56 bereitstellt. Ferner ist es denkbar, dass das mobile Endgerät 54, insbesondere ein weiterer Prozessor des mobilen Endgeräts 54, das einfach auch als Programm bezeichnete Computerprogramm beziehungsweise eine Kopie des Computerprogramms ausführt, sodass das Computerprogramm das mobile Endgerät 54 derart betreibt, dass das mobile Endgerät 54 die Daten 56 empfängt. Die von dem mobilen Endgerät 48 bereitgestellten und hierdurch an das mobile Endgerät 54 gesendeten Daten 56 charakterisieren bei dem in Fig. 1 und 2 gezeigten Ausführungsbeispiel wenigstens eine Maßnahme, durch welche eine Abweichung einer insbesondere aktuellen Ausrichtung des Fahrzeugs 10 von der horizontalen Ebene E zumindest verringert oder aufgehoben werden kann. Hierzu ordnet beispielsweise eine in den Figuren nicht dargestellte Person das mobile Endgerät 48 derart auf der Oberfläche 46 an, dass die Person das mobile Endgerät 48 direkt auf die Oberfläche 46 auflegt. Das mobile Endgerät 48 weist beispielsweise eine sogenannte, elektronische Wasserwaage auf, mittels welcher eine insbesondere aktuelle Ausrichtung des mobilen Endgeräts 48 relativ zu der horizontalen Ebene E ermittelt wird. Da das mobile Endgerät 48 auf der Oberfläche 46 angeordnet ist, mithin direkt auf der Oberfläche 46 liegt, entspricht die aktuelle Ausrichtung des mobilen Endgeräts 48 relativ zu der horizontalen Ebene E der zuvor genannten, insbesondere aktuellen Ausrichtung des Fahrzeugs 10 relativ zu der horizontalen Ebene E. Insbesondere kann die elektronische Wasserwaage des mobilen Endgeräts 48 eine Abweichung der Ausrichtung des mobilen Endgeräts 48 von der horizontalen Ebene E ermitteln, wobei die Abweichung der Ausrichtung des mobilen Endgeräts 48 von der horizontalen Ebene E der Abweichung der Ausrichtung des Fahrzeugs 10 von der horizontalen Ebene E entspricht. Das mobile Endgerät 48, insbesondere dessen Prozessor, wird durch das Computerprogramm beispielsweise derart betrieben, dass die genannte Maßnahme ermittelt, insbesondere berechnet, wird, welche durchzuführen ist, um die Abweichung zumindest zu verringern oder aufzuheben.

Insbesondere ist das erste mobile Endgerät 48 dazu ausgebildet, in einem Zustand, in welchem das erste mobile Endgerät 48 mittels des Mobilfunkmoduls 50 leitungslos mit dem Mobilfunknetz 52 verbunden ist, über das Mobilfunknetz 52 eine Sprachkommunikation mit dem zweiten mobilen Endgerät 54 und/oder mit einem dritten mobilen Endgerät, welches in den Figuren nicht dargestellt ist, durchzuführen. Hierzu weist beispielsweise das mobile Endgerät 48 einen Lautsprecher 58 zum Wiedergeben von Tönen auf, und das mobile Endgerät 48 weist wenigstens ein Mikrofon 60 zum Empfangen von Tönen auf. Über den Lautsprecher 58 und das Mikrofon 60 kann die zuvor genannte Sprachkommunikation durchgeführt werden, insbesondere derart, dass die zuvor genannte Person in das Mikrofon 60 sprechen kann. Mittels des Lautsprechers 58 können beispielsweise Töne und somit Wörter und Sätze einer anderen Person durchgeführt werden, die mit der zuvor genannten, ersten Person die Sprachkommunikation über das Mobilfunknetz 52 durchführt.

Das Endgerät 54 empfängt die Daten 56, wobei in Abhängigkeit von den mittels des Endgeräts 54 empfangenen Daten 56 mittels einer Wiedergabeeinrichtung 62 des Endgeräts 54 wenigstens ein die Ausrichtung der Oberfläche 46 und somit des Fahrzeugs 10 und/oder die Abweichung und/oder die Maßnahme charakterisierendes, auch als Ausgabesignal 64 bezeichnetes Signal an die Umgebung 42 ausgegeben wird. Bei dem in den Fig. 1 und 2 gezeigten Ausführungsbeispiel ist oder umfasst das Ausgabesignal 64 wenigstens ein optisches Signal 66, welches auf einer elektrischen oder elektronischen Anzeige 68 des Endgeräts 54 angezeigt und dadurch an die Umgebung 42 des Endgeräts 54 und des Fahrzeugs 10 ausgegeben wird. Dadurch visualisiert das Ausgabesignal 64 beispielsweise die zuvor genannte Maßnahme, welches somit auf der Anzeige 68 angezeigt wird. Die zuvor genannte Person kann somit auf die Anzeige 68 blicken und somit die Maßnahme optisch wahrnehmen, woraufhin die Person die Maßnahme einfach umsetzen kann. Hierdurch wird die Abweichung zumindest verringert oder aber aufgehoben.

Alternativ oder zusätzlich kann das Ausgabesignal 64 wenigstens eine die Ausrichtung und/oder die Abweichung und/oder die Maßnahme charakterisierende Sprachausgabe umfassen, welche beispielsweise mittels eines Lautsprechers 70 der Wiedergabeeinrichtung 62 und somit des Endgeräts 54 wiedergegeben und somit an die Umgebung 42 ausgegeben wird. Hierdurch kann die Person besonders einfach angeleitet werden, um die Maßnahme durchzuführen.

Die Daten 56 werden leitungslos mittels des Endgeräts 48 an das Endgerät 54 gesendet und von dem Endgerät 54 empfangen. Somit kann sich die Person mit dem Endgerät 54, welches von der Person mitgeführt wird, in der Umgebung 42 relativ zu dem Fahrzeug 10 und relativ zu dem auf der Oberfläche 46 liegenden Endgerät 48 bewegen und die Maßnahme durchführen, ohne durch physische Leitungen behindert zu werden. Insbesondere kann die Person in der Umgebung 42 verbleiben und muss nicht in den Innenraum 14 hineingehen, um beispielsweise die Maßnahmen mittels des Endgeräts 48 kommuniziert zu bekommen, sondern die Maßnahme wird der Person mittels des Endgeräts 54 kommuniziert, wodurch die Person das Fahrzeug 10 besonders einfach, komfortabel und zeitgünstig nivellieren kann.

Insbesondere werden mittels des Ausgabesignals 64 optisch und/oder akustisch wenigstens eine Stelle des Fahrzeugs 10 und wenigstens ein Maß kommuniziert, um welches zumindest ein Teilbereich des Fahrzeugs 10 in vertikaler Richtung und/oder in Fahrzeughochrichtung nach oben oder unten zu bewegen ist, um die Abweichung zumindest zu verringern oder aufzuheben. Beispielsweise ist an dem jeweiligen Rad eine jeweilige Hebeeinrichtung angeordnet, mittels welcher das jeweilige Rad in vertikaler Richtung und/oder in Fahrzeughochrichtung nach oben bewegt und somit angehoben sowie in Fahrzeughochrichtung und/oder in vertikaler Richtung nach unten bewegt und somit abgesenkt werden kann. Das Ausgabesignal 64 kommuniziert beispielsweise der genannten Person optisch und/oder akustisch, mithin per Sprachausgabe, welches der Fahrzeugräder anzuheben oder abzusenken ist und/oder welche der Hebeeinrichtungen, insbesondere auf welche Art, zu betätigen ist, um das jeweilige Rad, an welchem die jeweilige Hebeeinrichtung angeordnet ist, anzuheben oder abzusenken, um dadurch die Abweichung aufzuheben oder zumindest zu verringern. Beispielsweise weist die jeweilige Hebeeinrichtung eine Kurbel auf, die von der Person gekurbelt werden kann, um dadurch das jeweilige Rad anzuheben oder abzusenken. Beispielsweise kommuniziert das Ausgabesignal 64 eine Drehrichtung und/oder eine Anzahl an Umdrehungen, um die die jeweilige Kurbel, insbesondere in die jeweilige Drehrichtung, von der Person zu drehen ist, um dadurch das jeweilige Rad anzuheben oder abzusenken und somit die Abweichung zumindest aufzuheben oder zu verringern. Befolgt die Person die Maßnahme, das heißt, führt die Person die Maßnahme durch, so wird dadurch die Abweichung verringert oder aufgehoben. Das erste Verfahren ermöglicht es somit, das Fahrzeug 10 besonders einfach, komfortabel und zeitgünstig zu nivellieren.

Vorzugsweise ist es vorgesehen, dass die Daten 56 über eine leitungslos Datenverbindung 72 mittels des Endgeräts 48 gesendet und mittels des Endgeräts 54 empfangen werden, wobei vorzugsweise die leitungslose Datenverbindung 72 eine direkt zwischen den mobilen Endgeräten 48 und 54 hergestellte, leitungslose Datenverbindung ist. Hierzu weist beispielsweise das Endgerät 48 ein zusätzlich zu dem Mobilfunkmodul 50 vorgesehenes Verbindungsmodul 74 auf, und das Endgerät 54 weist ein Verbindungsmodul 76 auf, wobei die Datenverbindung 72 direkt zwischen den Verbindungsmodulen 74 und 76 hergestellt ist beziehungsweise wird.

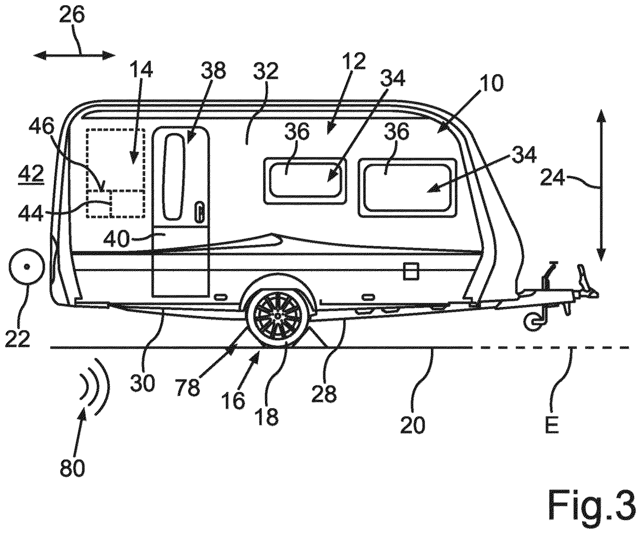

Fig. 3 zeigt das Fahrzeug 10 in einer weiteren Seitenansicht. Anhand von Fig. 3 wird ein zweites Verfahren zum Nivellieren des Fahrzeugs 10 beschrieben. Bei dem zweiten Verfahren werden mittels wenigstens einer bezüglich des Fahrzeugs 10 externen und als ein unabhängig von dem Fahrzeug 10 vollständig zusammengebautes Modul ausgebildeten und vorliegend an dem Rad 18 angeordneten Nivelliervorrichtung 78 Daten 80 empfangen, welche beispielsweise die aktuelle Ausrichtung des Fahrzeugs 10 relativ zu der horizontalen Ebene E und/oder die Abweichung der Ausrichtung des Fahrzeugs 10 von der horizontalen Ebene E und/oder die Maßnahme charakterisieren, durch welche die Abweichung zumindest zu verringern oder aufhebbar ist. Mittels der Nivelliervorrichtung 78 wird die Abweichung automatisch zumindest verringert oder aufgehoben, indem in Abhängigkeit von den von der Nivelliervorrichtung 78 empfangenen Daten 80 wenigstens ein Aktor der Nivelliervorrichtung 78 betrieben wird, wodurch wenigstens ein Betätigungselement der Nivelliervorrichtung 78 relativ zum wenigstens einen Basiselement der Nivelliervorrichtung 78 und dadurch zumindest ein Teilbereich des Fahrzeugs 10 zumindest in vertikaler Richtung und/oder in Fahrzeughochrichtung bewegt werden. Mit anderen Worten wird mittels der Nivelliervorrichtung 78 automatisch in Abhängigkeit von den Daten 80 zumindest der Teilbereich des Fahrzeugs 10 aufgehoben oder abgesenkt, um dadurch die Abweichung zumindest zu verringern.

Beispielsweise werden die Daten 80 von dem Endgerät 48 bereitgestellt, mittels welchen beispielsweise die Ausrichtung und/oder die Abweichung und/oder die Maßnahme ermittelt wird. Mittels des zweiten Verfahrens kann das Fahrzeug 10 besonders einfach, komfortabel und zeitgünstig nivelliert werden.

## Patentansprüche

1. Verfahren zum Nivellieren eines Fahrzeugs (10), bei welchem:
- mittels wenigstens einer bezüglich des Fahrzeugs (10) externen und als ein unabhängig von dem Fahrzeug (10) vollständig zusammengebautes Modul ausgebildeten Nivelliervorrichtung (78) Daten (80) empfangen werden, welche eine Ausrichtung des Fahrzeugs (10) relativ zu einer horizontalen Ebene (E) und/oder eine Abweichung der Ausrichtung von der horizontalen Ebene (E) und/oder wenigstens eine Maßnahme charakterisieren, durch welche die Abweichung zumindest zu verringern oder aufhebbar ist, und
- mittels der Nivelliervorrichtung (78) die Abweichung automatisch zumindest verringert oder aufgehoben wird, indem in Abhängigkeit von den empfangenen Daten (80) wenigstens ein Aktor der Nivelliervorrichtung (78) betrieben wird, wodurch wenigstens ein Betätigungselement relativ zu wenigstens einem Basiselement der Nivelliervorrichtung (78) und dadurch zumindest ein Teilbereich des Fahrzeugs (10) zumindest in vertikaler Richtung und/oder in Fahrzeughochrichtung (24) bewegt werden.

2. Verfahren nach Anspruch 1,
**dadurch gekennzeichnet, dass**
der Aktor mittels elektrischer Energie betrieben wird, welche in einem elektrischen Energiespeicher der Nivelliervorrichtung (78) gespeichert ist.

3. Verfahren nach Anspruch 1 oder 2,
**dadurch gekennzeichnet, dass**
mittels der Nivelliervorrichtung (78) die Daten (80) über eine leitungslose Datenverbindung empfangen werden.

4. Verfahren nach einem der vorhergehenden Ansprüche,
**dadurch gekennzeichnet, dass**
bereits die empfangenen Daten (80) wenigstens ein Ansteuersignal umfassen, mittels welchem der Aktor angesteuert und dadurch betrieben wird.

5. Verfahren nach Anspruch 4,
**dadurch gekennzeichnet, dass**
bereits die empfangenen Daten (80) wenigstens eine Zeitspanne, während welcher der Aktor unterbrechungsfrei zu betreiben ist, und/oder wenigstens eine Stromstärke eines elektrischen Stroms, mit welchem der Aktor zu versorgen ist, um dadurch den Aktor zu betreiben, umfassen.
